# EUROPEAN PATENT APPLICATION

(11) **EP 4 647 947 A1**
(43) Date of publication of application: **12.11.2025**
(21) Application number: 24174490.3
(22) Date of filing: 07.05.2024
(51) Int. Cl.: G06F 21/33, H04L 9/00, H04L 9/40, H04W 12/10, H04W 12/069

(54) **METHOD OF OPERATING A PUBLIC KEY CERTIFICATE VALIDATION SYSTEM FOR FACILITATING A SECURE COMMUNICATION BETWEEN AN AIRCRAFT AND A GROUND ENTITY**

(71) Applicant: ARINC Incorporated, Annapolis, MD 21401 (US)
(72) Inventor: Graefe, Jonathan M., 21409-5439 Annapolis, MD (US)
(74) Representative: Schmitt-Nilson Schraud Waibel Wohlfrom Patentanwälte Partnerschaft mbB

(57) **Abstract**

A method of operating a public key certificate validation system for facilitating a secure communication (20) between an aircraft (2) and a ground entity (4) includes: sending a public key certificate of the ground entity (4) from the ground entity (4) to a trusted responder (8); at the trusted responder (8), validating the public key certificate of the ground entity (4) and storing a trust indication regarding the public key certificate of the ground entity in a pre-cached validation database (10); and at the trusted responder (8), maintaining the pre-cached validation database (10) for providing a validation response (32) regarding the public key certificate of the ground entity (4), when a validation request (30), associated with the secure communication between the aircraft (2) and the ground entity (4), reaches the trusted responder (8), wherein the validation response (32) is based on the trust indication regarding the public key certificate of the ground entity (4) from the pre-cached validation database (10).

## Description

The present invention is in the field of aircraft communications. In particular, the present invention is in the field of establishing secure communication between aircraft and ground entities.

Aircraft operate in an environment that is heavily constrained in terms of communication resources. In particular, aircraft often times work in limited radiofrequency (RF) bandwidth environments. They often have to share a single frequency between many aircraft. Accordingly, RF transmission time is a very precious resource for aircraft.

It is further highly important for aircraft to establish secure communications with ground entities. Modern aircraft rely on encryption of messages with respective key pairs of public and private keys. The public key of every key pair is commonly associated with a public key certificate, which is an electronic document for proving the validity of a public key. The establishing of secure communication commonly requires an elaborate handshake protocol, leading to a large communication overhead, before the actual exchange of payload data is enabled. Given the limited RF resource, the handshakes may be a large burden on the RF resources. Also, with common handshakes often requiring the completion of the handshake to take place in a limited amount of time and with the RF resource being constrained, handshakes often fail due to time-out constraints.

Accordingly, it would be beneficial to provide a framework that reduces the risk of of handshakes failing due to time-out constraints.

Exemplary embodiments of the invention include a method of operating a public key certificate validation system for facilitating a secure communication between an aircraft and a ground entity, the method comprising: sending a public key certificate of the ground entity from the ground entity to a trusted responder; at the trusted responder, validating the public key certificate of the ground entity and storing a trust indication regarding the public key certificate of the ground entity in a pre-cached validation database; and at the trusted responder, maintaining the pre-cached validation database for providing a validation response regarding the public key certificate of the ground entity, when a validation request, associated with the secure communication between the aircraft and the ground entity, reaches the trusted responder, wherein the validation response is based on the trust indication regarding the public key certificate of the ground entity from the pre-cached validation database.

Exemplary embodiments of the invention allow for a particularly low turn-around time in the validation of the public key certificate of the ground entity. In this way, exemplary embodiments of the invention may contribute to a low duration of the handshake between the aircraft and the ground entity and may, thus, contribute to a reduced risk of the handshake between the aircraft and the ground entity failing due to time-out constraints. With the trust indication regarding the public key certificate of the ground entity being readily available in the pre-cached validation database, the trusted responder may provide a very quick response to a validation request regarding the public key certificate of the ground entity. The need for carrying out the validation process of the public key certificate of the ground entity ad-hoc, i.e. right when the validation request reaches the trusted responder, may be eliminated. The validation process of the public key certificate of the ground entity, which may involve evaluating / validating multiple legs of a public key infrastructure (PKI) and which may, thus, be a time-consuming process, may be front-loaded. In particular, the validation process of the public key certificate of the ground entity may be made independent from a concrete validation request and may, thus, be de-coupled from the handshake between the aircraft and the ground entity. At the time of the handshake of the aircraft and the ground entity, the trust indication may be readily available in the pre-cached validation database.

As described herein, exemplary embodiments of the invention relate to methods for facilitating secure communication between aircraft and ground entities. The term secure communication relates to communication that is protected by cryptographic means. In particular, the secure communication may be implemented via the use of a cryptographic key pair for each of the aircraft and the ground entity. Further in particular, each of the aircraft and the ground entity may have a respective pair of a public key and a private key, with the outbound communication being encrypted with the public key of the respectively other entity and with the inbound communication being decrypted with the private key of the receiving entity. Each of the cryptographic key pairs may in particular be an RSA key pair, an ESDSA key pair or any other type of suitable key pair. A public key certificate of the aircraft is associated with the public key of the aircraft, and the public key certificate of the ground entity is associated with the public key of the ground entity. The cryptographic key pairs may be predefined / pre-generated key pairs or may be session key pairs. The term secure communication does not necessarily mean that the communication is 100% secure against attacks. Rather, the term secure communication relates to communication that is protected by the use of encryption keys, with the certificates associated with the encryption keys being subject to some form of authentication in the initial stages of the establishment of the communication between the aircraft and the ground entity.

There may be various reasons for the need to have a secure communication between the aircraft and the ground entity and to perform an authentication in the initial stages of the communication. The need may arise from the contents of the communication. For example, the aircraft and the ground entity may share safety-relevant data regarding the flight of the aircraft and / or the flight path of the aircraft. For such data, there is a very strong interest in maintaining communication integrity between the aircraft and the ground entity. The need may also arise from the fact that there is no or only a low level of prima facie trust between the aircraft and the ground entity, i.e. that there is no or only a low level of trust at the onset of the communication. For example, the aircraft may be from a different country than the location of the ground entity. In another example, the aircraft operator may be different from the operator of the ground entity. With different countries and different operators of aviation equipment belonging to different trust groups and/or to different trust levels, general aviation procedures may require a mutual authentication of the aircraft and the ground entity, in order to establish a trustworthiness of both entities that is considered sufficient, in particular sufficient for exchanging potentially safety-relevant communication between the aircraft and the ground entity.

For security reasons, certificates are often short-lived in the aviation field. For example, the public key certificates, as described herein, may be valid for some days only. Accordingly, the demand for validation of public key certificates is an ongoing demand in the aviation field.

The aircraft may have a key pair comprising a public key and a private key. The public key certificate of the aircraft is associated with the key pair of the aircraft. It can also be said that the public key certificate of the aircraft is associated with the public key of the aircraft. The aircraft may send its public key to the ground entity.

The ground entity may have a key pair, comprising a public key and a private key. The public key certificate of the ground entity is associated with the key pair of the ground entity. It can also be said that the public key certificate of the ground entity is associated with the public key of the ground entity. The ground entity may send its public key to the aircraft.

The key pairs may be predefined / pre-generated key pairs. It is also possible that session key pairs are generated in an algorithmic manner with the help of the public key certificates of the aircraft and the ground entity. The session key pairs may be generated / exchanged after the exchange / obtainment of the certificates of the aircraft and ground entity.

The public key certificate of the aircraft / ground entity may also be referred to as a digital certificate or as an identity certificate or simply as a certificate of the aircraft / ground entity herein. The public key certificate of the aircraft / ground entity may be a TLS/DTLS certificate, i.e. a certificate that is suitable for being used for authentication according to the TLS/DTLS standard.

The ground entity may be any ground entity that is part of an aviation communication network and that offers ground communication services to aircraft. The ground entity may, for example, be an airport or a communication outpost on an island or in a remote land portion or a ground communication link in a sparsely populated region / in a region with sparse aviation infrastructure.

The method comprises sending a public key certificate of the ground entity from the ground entity to a trusted responder and, at the trusted responder, validating the public key certificate of the ground entity. The trusted responder is an entity that is configured to navigate the public key infrastructure (PKI) and to determine a trustworthiness of a particular public key certificate and/or a trustworthiness of a path within the public key infrastructure between two certificates. In case the public key infrastructure is seen as a PKI tree, the trusted responder may evaluate the trustworthiness of a certain path between two leafs of said tree and/or the trustworthiness of a certain leaf, also referred to as certain node of the tree. For this purpose, the trusted responder may walk the PKI tree from the certificate in question up to a recognized certificate authority. It can also be said that the trusted responder may walk the legs of the PKI tree from the certificate in question up to a recognized certificate authority. This process of determining the trustworthiness of a particular public key certificate may be understood as validating the particular public key certificate. The validating of the public key certificate may include additional checks, such as checking whether the public key certificate is expired, revoked, etc. It is understood that the trusted responder may involve other entities for validating the public key certificate of the ground entity. As the trusted responder initiates the validation, controls the validation, and stores the result of the validation, the step of validating the public key certificate of the ground entity is considered to be carried out at the trusted responder, regardless of whether the trusted responder uses / interacts with other entities in the process.

The term trusted responder is commonly used in various protocols where certificates may be checked / validated in online procedures. An example of such a protocol is the Online Certificate Status Protocol (OCSP). The trusted responder is considered trusted, because one of the entities of the end-to-end communication trusts the trusted responder for making a reliable determination regarding the validity / authenticity of the certificate to be validated. As discussed above, different countries and/or different aviation operators may be in different trust groups and/or may not have an upfront trust for each other. Accordingly, an aircraft from a first trust group may want to communicate with a ground entity from a second trust group and may indicate a trusted responder within the first trust group to the ground entity for having the public key certificate of the ground entity validated.

The trusted responder may in particular be a responder that the aircraft trusts. In this way, the aircraft can gain a sufficient level of trust for the ground entity from the validation response, without having to carry out the validation process itself. In particular, because the validation response stems from an entity that the aircraft trusts, the aircraft can determine from the validation response whether the trustworthiness of the ground entity is high enough to start the secure communication. The aircraft may be brought into a position to take an informed / reasoned decision on whether to trust the ground entity or not, without having to carry out its own validation procedure over the scarce RF resource. With the validation of the public key certificate of the ground entity being front-loaded and being offloaded to ground entities, which do not operate in a constrained RF network, the validation regarding the public key certificate of the ground entity may be carried out in a predictable and quick manner. The risk of the handshake between the aircraft and the ground entity timing out, as has often been the case in previous approaches where the RF resource was involved, may be greatly reduced.

The method comprises storing a trust indication regarding the public key certificate of the ground entity in a pre-cached validation database. The trust indication may be the result of the validation process regarding the public key certificate of the ground entity, as laid out above, or may be information derived / deduced from the result of said validation process. The pre-cached validation database may be any database that is capable of storing such validation process results / such information derived from the validation process results in a searchable manner. In particular, the public key certificate of the ground entity or another unique identifier of the ground entity may be used for querying the pre-cached validation database, in order to retrieve the respective validation process result / the respective information derived from the respective validation process result. The pre-cached validation database is in particular configured to store the trust indications independent from concrete validation requests. In particular, the pre-cached validation database is a database entity that is populated in a preemptive manner. The database entries of the pre-cached validation database are maintained for later use. They may in particular be stored irrespective of whether and when they are potentially read out in response to a concrete validation request. The pre-cached validation database is a database of cached validation process results / of cached information derived from validation process results, wherein the cached nature of those trust indications allows for a quick access, if and when they are requested. The pre-cached validation database may be maintained at the site of the trusted reponder / may be integrated with the trusted responder. The pre-cached validation database may also be a separate entity that is coupled to and accessible from the trusted responder. As the trusted responder has access to and control over the contents of the pre-cached validation database, the pre-cached validation database is considered to be maintained at the trusted responder, irrespective of the exact location and the particular nature of the data connection between the trusted responder and the pre-cached validation database.

The trust indication, as stored in the pre-cached validation database, may also be referred to as an indication regarding the trustworthiness of the public key certificate of the ground entity. Stated differently, the trust indication may be an indication regarding the level of trust that a communication partner, e.g. the aircraft, can have with respect to the ground entity. The indication regarding the trustworthiness of the public key certificate of the ground entity may be a simple trustworthy / not trustworthy indication. It may also contain some sort of score regarding the trustworthiness of the public key certificate of the ground entity. This score may, for example, depend on the level of confidence in the individual legs of the path of the public key infrastructure tree between the ground entity and a trusted certificate authority, as assessed by the trusted responder. In any case, the trust indication may contain information that enables the aircraft to make a well-informed / well-reasoned decision whether or not to trust the ground entity.

The method comprises, at the trusted responder, maintaining the pre-cached validation database for providing a validation response regarding the public key certificate of the ground entity, when a validation request, associated with the secure communication between the aircraft and the ground entity, reaches the trusted responder, wherein the validation response is based on the trust indication regarding the public key certificate of the ground entity from the pre-cached validation database. The validation request is a validation request regarding the public key certificate of the ground entity. In the course of establishing the secure communication between the aircraft and the ground entity, said validation request may be issued by the aircraft or by the ground entity. The trusted responder uses the pre-cached validation database for addressing the validation request. In particular, the trusted responder queries the pre-cached validation database for the pre-stored / cached trust indication regarding the public key certificate of the ground entity. Further in particular, when receiving the validation request, the trusted responder does not have to carry out the validation process regarding the public key certificate of the ground entity on the spot / ad-hoc, but can rely on the readily available pre-cached validation database.

The language of providing a validation response regarding the public key certificate of the ground entity, when a validation request, associated with the secure communication between the aircraft and the ground entity, reaches the trusted responder, does not imply a strict timing relationship between receiving the validation request and sending out the validation response. Rather, the expression may be understood as the trusted responder issuing the validation response pursuant to / in response to receiving a concrete validation request, associated with the secure communication between the aircraft and the ground entity. With the pre-cached validation database being readily available, the validation response can be sent out considerably more quickly after receiving the validation request, as compared to previous approaches, where the validation process was started after receiving the validation request.

The trusted responder maintains the pre-cached validation database, in order to react quickly to a concrete validation request, associated with the secure communication between the aircraft and the ground entity. It can be said that the trusted responder maintains the pre-cached validation database for being able to provide a validation response regarding the public key certificate of the ground entity, if and when a validation request, associated with the secure communication between the aircraft and the ground entity, reaches the trusted responder. In operation, the trusted responder may maintain the pre-cached validation database for an extended period of time and may provide the validation response in the course of a concrete handshake between the aircraft and the ground entity.

The validation response is a response to the validation request. The validation response may comprise the trust indication, as obtained from the pre-cached validation database, or may comprise information deduced / derived from the trust indication, as obtained from the pre-cached validation database. In any case, the validation response is based on the trust indication regarding the public key certificate of the ground entity from the pre-cached validation database.

As described herein, exemplary embodiments of the invention relate to a method of operating a public key certificate validation system. Said public key certificate validation system may comprise the ground entity and the trusted responder. The ground entity and the trusted responder may carry out various method steps, as described herein, irrespective of a particular instance of communication between the ground entity and an aircraft. The public key certificate validation system may operate in the described manner, in order to be ready for quickly facilitating a secure communication between the ground entity and an aircraft, when desired. It is understood that the public key certificate validation system may comprise a plurality of ground entities and a plurality of trusted responders. In this way, an aircraft may establish a secure communication with a plurality of ground entities and may choose from a plurality of trusted responders, selectively making use of the various pre-cached validation databases maintained at the plurality of trusted responders.

According to a further embodiment, the trusted responder is an OCSP trusted responder. In other words, the trusted responder may be a trusted responder in accordance with the Online Certificate Status Protocol (OCSP).

According to a further embodiment, the validation request is an OCSP validation request and the validation response is an OCSP validation response. In other words, the validation request and the validation response may be a validation request and a validation response in accordance with the Online Certificate Status Protocol (OCSP).

It has been found that the Online Certificate Status Protocol (OCSP) is a highly efficient protocol for establishing the trustworthiness of the ground entity and, potentially, for establishing the trustworthiness of the full public key infrastructure path between the aircraft and the ground entity. The trust indication, as stored in the pre-cached validation database, may be stored in a format that is readily usable for the Online Certificate Status Protocol (OCSP).

According to a further embodiment, said validating of the public key certificate of the ground entity comprises evaluating all legs of a public key infrastructure (PKI) path between the public key certificate of the ground entity and a trusted root node. The trusted root mode may for example be a trusted certificate authority. Each of the legs of the public key infrastructure path may be evaluated via leg-specific validation request and validation response messages. In particular, each of the legs of the public key infrastructure path may be evaluated via respective OCSP messages.

According to a further embodiment, the trust indication regarding the public key certificate of the ground entity, stored in the pre-cached validation database, is a trust indication regarding a public key infrastructure (PKI) path between the public key certificate of the ground entity and a trusted root node. The trusted root node may for example be a trusted certificate authority. In this way, the trust indication may be a piece of information that represents a compiled trustworthiness of the full PKI path between the public key certificate of the ground entity and a trusted root node. This piece of information may be readily used for the validation response, and the validation response may put the aircraft in a position to take well-reasoned decision regarding the trustworthiness of the public key certificate of the ground entity, taking into account the relevant parts of the underlying public key infrastructure.

According to a further embodiment, the secure communication between the aircraft and the ground entity is a TLS/DTLS-based secure communication. In other words, the secure communication between the aircraft and the ground entity may be carried out in accordance with the Transport Layer Security (TLS) protocol. As a specific implementation thereof, the secure communication between the aircraft and the ground entity may be carried out in accordance with the Datagram Transport Layer Security (DTLS) protocol. As used herein, the expression TLS/DTLS means TLS or DTLS. The secure communication may be carried out in accordance with any version of TLS, such as TLS 1.3, or in accordance with any version of DTLS, such as DTLS 1.3.

According to a further embodiment, the method further comprises re-sending the public key certificate of the ground entity from the ground entity to the trusted responder in predefined intervals; and, at the trusted responder, re-validating the public key certificate of the ground entity and storing an updated trust indication regarding the public key certificate of the ground entity in the pre-cached validation database. In this way, the validation of the public key certificate of the ground entity may be re-done in a proactive manner, and developments affecting the trustworthiness of the public key certificate of the ground entity may be detected in a timely manner. It may be prevented that a positive trust indication is "frozen" in the pre-cached validation database for an extended period of time, although the trustworthiness of the public key certificate of the ground entity may have gone down. The predefined intervals may be regular intervals / periodic intervals. It is possible that certain deviations from a regular / periodic schedule are accepted. This may help in accounting for data traffic constraints, in accounting for delays due to the ground entity being busy with other communication tasks, etc. In an exemplary embodiment, the ground entity may re-send its public key certificate to the trusted responder once per day. It is also possible that the ground entity re-sends its public key certificate to the trusted responder in randomized intervals. In case this randomized nature of the intervals is intended and programmed accordingly, the randomized intervals are considered a particular form of predefined intervals. The updated trust indication may be the same as the previous trust indication in terms of the result of the validation process or may be different. The pre-cached validation database may store a time stamp of the trust indication / of the updated updated trust indication or may have another suitable data field for logging the time sequence of trust indications.

According to a further embodiment, the method further comprises sending a new public key certificate of the ground entity from the ground entity to the trusted responder; and, at the trusted responder, validating the new public key certificate of the ground entity and storing an updated trust indication regarding the new public key certificate of the ground entity in the pre-cached validation database. In this way, the public key certificate validation system may react to the replacement of public key certificates in a proactive manner. In particular, the update / exchange of the public key certificate of the ground entity may be reflected in the pre-cached validation database in a timely manner. The pre-cached validation database may be kept up to date in a reliable manner. This may be particularly beneficial in the aviation field, where public key certificates are often short-lived certificates.

According to a further embodiment, the method comprises: sending the public key certificate of the ground entity from the ground entity to a plurality of trusted responders; at each of the plurality of trusted responders, validating the public key certificate of the ground entity and storing a respective trust indication regarding the public key certificate of the ground entity in a respective pre-cached validation database; and at each of the plurality of trusted responders, maintaining the respective pre-cached validation database for providing a validation response regarding the public key certificate of the ground entity, when a validation request, associated with the secure communication between the aircraft and the ground entity, reaches the respective trusted responder, wherein the validation response is based on the respective trust indication regarding the public key certificate of the ground entity from the respective pre-cached validation database. In this way, the public key certificate of the ground entity may be distributed among a wide set of trusted responders, and each of the trusted responders may be in a position to quickly react to a validation request regarding the public key certificate of the ground entity. An aircraft, relying on a particular trusted responder or on a particular set of trusted responders, may thus have a high chance of obtaining a quick validation response via the pre-cached validation database of the particular trusted responder(s).

According to a further embodiment, the method comprises: at the trusted responder, receiving, from each of a plurality of ground entities, a respective public key certificate; at the trusted responder, validating, for each of the plurality of ground entities, the respective public key certificate and storing a respective trust indication regarding the respective public key certificate of the respective ground entity in the pre-cached validation database; and, at the trusted responder, maintaining the pre-cached validation database for providing respective validation responses regarding the respective public key certificates of the plurality of ground entities, wherein the respective validation responses are based on the respective trust indications regarding the respective public key certificates of the plurality of ground entities from the pre-cached validation database. In this way, the trusted responder may be in a position to quickly react to validation requests regarding the public key certificates of many ground entities. An aircraft, wanting to enter into a secure communication with a particular ground entity out of a large number of ground entities, may therefore have a high chance of obtaining a quick validation response via the pre-cached validation database.

It is understood that the aspects of the two preceding paragraphs, namely the aspect of a particular trusted responder maintaining a pre-cached validation database with trust indications of many ground entities and the aspect of a particular ground entity sending its public key certificate to many trusted responders for a front-loaded validation, may be combined. An extended network of ground entities and trusted responders may be established. In this way, an aircraft, wanting to communicate with a particular ground entity and relying on one or a few particular trusted responders, may still have a high chance of obtaining a quick validation response via the pre-cached validation database of a particular trusted responder.

Stated differently, the public key certificate validation system, as described herein, may comprise a plurality of ground entities and a plurality of trusted responders, and the method steps, as described for a single ground entity and a single trusted responder, may be applied to many or even all possible pairs of ground entity and trusted responder.

According to a further embodiment, the method comprises: at the trusted responder, receiving, from each of a plurality of aircraft, a respective aircraft public key certificate; at the trusted responder, validating, for each of the plurality of aircraft, the respective aircraft public key certificate and storing a respective aircraft trust indication regarding the respective aircraft public key certificate of the respective aircraft in the pre-cached validation database; and at the trusted responder, maintaining the pre-cached validation database for providing respective validation responses regarding the respective aircraft public key certificates of the plurality of aircraft, wherein the respective validation responses are based on the respective trust indications regarding the respective aircraft public key certificates of the plurality of aircraft from the pre-cached validation database. In this way, the infrastructure of the public key validation system, as described herein, may be extended to public key certificates of aircraft. In particular, the pre-cached validation database(s) of the trusted responder(s) may additionally be populated with trust indications regarding the public key certificates of a plurality of aircraft. Accordingly, when a particular ground entity enters into a secure communication with a particular aircraft and wishes to validate the public key certificate of the aircraft, the particular ground entity may also have a high chance of obtaining a quick validation response via a pre-cached validation database. This may further reduce the risk of the handshake failing due to time-out constraints.

In embodiments where trust indications regarding public key certificates of ground entities and trust indications regarding public key certificates of aircraft are stored in the pre-cached validation database, validation responses relating to both the public key certificate of the ground entity and the public key certificate of the aircraft may be provided in a quick manner on the basis of the data contained in the pre-cached validation database. In particular, pursuant to receiving a validation request that relates to both the public key certificate of the ground entity and the public key certificate of the aircraft, the trusted responder may retrieve the trust indication regarding the public key certificate of the ground entity and the trust indication regarding the public key certificate of the aircraft from the pre-cached validation database. On the basis of both of these trust indications, the trusted responder may provide a validation response that indicates a combined trustworthiness of two portions of the public key infrastructure tree, namely the public key infrastructure path from the public key certificate of the ground entity to a trusted root node and the public key infrastructure path from the public key certificate of the aircraft to a trusted root node. In this way, a single validation response may have sufficient information to put both the ground entity and the aircraft in a position to take a well-informed decision whether to enter into the secure communication or not.

According to a further embodiment, the validation request regarding the public key certificate of the ground entity is sent from the ground entity to the trusted responder in response to receiving a communication initialization message from the aircraft. In this way, implementations of the handshake between the aircraft and the ground entity with a particularly low usage of the RF resource may be achieved. As compared to previous approaches where it was the aircraft's task to validate the public key certificate of the ground entity out of its own motion, after receiving the public key certificate of the ground entity from the ground entity, the burden of validating the public key certificate of the ground entity may be offloaded to a validation process on the ground where the involved entities are not as constrained in terms of their communication resources. In previous approaches, the aircraft triggered some form of certificate validation process via a separate message over the constrained RF resource and received some form of response, also over the constrained RF resource. With the ground entity issuing the validation request to the trusted responder, this requirement may be eliminated and the validation of the public key certificate of the ground entity may be offloaded to a network of ground entities only. In this way, the scarce RF resource may be alleviated from the traffic generated in the context of validating the public key certificate of the ground entity.

The term communication initialization message indicates that that message is the beginning of an initial exchange of messages between the aircraft and the ground entity. In particular, the communication initialization message may be the first message with which the aircraft starts a communication with the ground entity. The communication initialization message may be the first message of a handshake protocol between the aircraft and the ground entity. The said initial exchange of messages is an exchange of messages that requires an exchange of public key certificates and, potentially, public keys for establishing a secure communication. The initial exchange of messages may comprise a mutual authentication and may comprise a validation of the exchanged public key certificates. The initial exchange of messages is a non-resumption exchange, i.e. it is not part of an exchange of messages between the aircraft and the ground entity that is subsequent to a previously established communication, which may have been paused or which may have been lost due to the aircraft and the ground entity losing the joint radio frequency channel. For example, in case an aircraft flies through the coverage area of a particular ground entity and re-enters that coverage area a short time later, such as later during the same day or the following day, it is possible to resume the previous secure communication via a resumption operation. In this case, it is possible that no exchange of certificates is needed. The communication initialization message is not part of such a resumption of a previous secure communication, but forms part of an establishing of a secure communication where a full handshake, including an exchange of certificates and a validation of certificates, is required.

According to a further embodiment, the trusted responder is indicated in the communication initialization message from the aircraft. The ground entity may only be allowed to use the trusted responder for validating its public key certificate, when said trusted responder is indicated in the communication initialization message from the aircraft. In this way, the aircraft may have control over which trusted responder may issue an acceptable validation response. The trusted responder may be indicated via a responder identification and/or via an address where the trusted responder may be reached, e.g. an IP address.

According to a further embodiment, the trusted responder is indicated in a listing of at least one potential trusted responder, said listing being included in the communication initialization message from the aircraft. In this way, the aircraft may give the ground entity some freedom to decide between different trusted responders. This may in particular be beneficial where the ground entity has sent its public key certificate to some trusted responders, but not all trusted responders of the public key certificate validation system. The ground entity may match the listing of potential trusted responder(s) with those trusted responders that the ground entity previously sent its public key certificate to. The intersection is a set of trusted responder(s) that are accepted by the aircraft for validating the public key certificate of the ground entity and that promise a quick turn-around due to their pre-cached validation database already having a record regarding the ground entity. In case the listing of at least one potential trusted responder comprises a plurality of potential trusted responders, the ground entity may select among that plurality of trusted responders. In case the listing of at least one potential trusted responder comprises only one trusted responder, the ground entity has to select this trusted responder.

According to a further embodiment, the communication initialization message is a client hello message. In particular, the communication initialization message may be a client hello message in accordance with the TLS communication protocol or in accordance with the DTLS communication protocol. By definition, the client hello message of the TLS/DTLS communication protocol is the message to start the communication.

According to a further embodiment, the listing of the at least one potential trusted responder is included in a responder extension of the client hello message. The term responder extension is used as referring to any suitable extension of the client hello message that may contain the listing of the at least one potential trusted responder. In particular, the client hello message may comprise a certificate status request, such as a certificate status request in accordance with the Online Certificate Status Protocol (OCSP). Said certificate status request may be provided with one or more trusted responder IDs. It can therefore also be said that the at least one potential trusted responder is provided in a certificate status request with trusted responder IDs extension of the client hello message. The certificate status request may in particular be structured in accordance with the RFC 6066 Section 8 definition of the TLS extension. The listing of the at least one potential trusted responder may be provided as a responder_ID_list in the extension of the client hello message.

According to a further embodiment, the listing of at least one potential trusted responder comprises a plurality of potential trusted responders. By providing a plurality of potential trusted responders, the ground entity is brought into a position to select a suitable one of the potential trusted responders. In particular, the ground entity may select the trusted responder that promises the shortest turn-around time for providing the validation response. Also, the ground entity may turn to a fall-back trusted responder, in case the originally selected trusted responder is out of service, does not answer, fails to provide the validation response, etc.

According to a further embodiment, the communication initialization message comprises a public key certificate of the aircraft, herein also referred to as aircraft public key certificate. Including the public key certificate of the aircraft into the communication initialization message may allow for the mutual authentication of the aircraft and the ground entity with a lower number of messages and with a low usage of the RF resources to / from the aircraft. As compared to previous approaches, the message exchange for the handshake between the aircraft and the ground entity may be kept to a reduced number of messages. In particular, as compared to previous approaches where the aircraft initiated the communication with a first message, where the ground entity responded to the first message with a second message, which included the public key certificate of the ground entity, and where the aircraft sent the public key certificate of the aircraft to the ground entity in a third message, the exchange of public key certificates may be kept to a first message from the aircraft, herein referred to as the communication initialization message, and a second message from the ground entity, herein referred to as the response message to the communication initialization message. By including the public key certificate of the aircraft into the communication initialization message, a front loading of the exchange of certificates and a reduction of messages for exchanging certificates may be achieved.

The public key certificate of the aircraft may be contained in the communication initialization message in an uncompressed version or in a compressed version. When using a compressed version of the public key certificate of the aircraft, the communication initialization message may have a smaller size than in the case of using an uncompressed version of the public key certificate and, potentially, the public key. In this way, the usage of the constrained RF resource may be kept particularly low.

According to a further embodiment, the communication initialization message comprises unique identification information regarding a public key certificate of the aircraft, herein also referred to as aircraft public key certificate. The unique identification information may comprise any kind of information that allows for an unambiguous identification of the public key certificate of the aircraft. For example, the unique identification information may comprise certificate issuer information and a serial number of the public key certificate of the aircraft. In other words, the unique identification information may comprise an unambiguous indication which authority issued the public key certificate of the aircraft and what the serial number of the public key certificate of the aircraft is.

In embodiments where the communication initialization message comprises unique identification information regarding the public key certificate of the aircraft, the method may comprise the step of obtaining the public key certificate of the aircraft via the unique identification information. The obtaining of the public key certificate is arranged for by the ground entity. Accordingly, it can also be said that the method comprises obtaining, at the ground entity, the public key certificate of the aircraft via the unique identification information. The ground entity may obtain the public key certificate of the aircraft from any suitable entity that has the public key certificate of the aircraft available. In particular, the ground entity may request the public key certificate of the aircraft from an entity for which it has a high level of trust. It is possible that the public key certificate of the aircraft is requested right from the issuer of the certificate or from another entity. In this way, the aircraft may be freed from the need to send its public key certificate to the ground entity.

According to a further embodiment, the public key certificate of the aircraft or the unique identification information regarding the public key certificate of the aircraft is provided in a certificate extension of the client hello message. In previous approaches, no extension for communicating the client certificate in the client hello message existed. Accordingly, providing a certificate extension and using said certificate extension for communicating the client certificate in the client hello message, i.e. for communicating the public key certificate of the aircraft in the client hello message, provides for a particularly efficient way of frontloading the certificate exchange between the aircraft and the ground entity. The term certificate extension is used as referring to any suitable extension of the client hello message that may contain the public key certificate of the aircraft or the unique identification information regarding the public key certificate of the aircraft. In an exemplary embodiment, the "Reserved for Private Use" section of the cached info extension of the RFC 7924 definition for TLS extensions may be used.

Further details with respect to the communication initialization message comprising the public key certificate of the aircraft or the unique identification information regarding the public key certificate of the aircraft and with respect to processing and using said data are given in European patent application EP 24 170 898.1, filed on April 17, 2024 by the same applicant as the present application. The entire contents of EP 24 170 898.1 is incorporated into the present application by reference.

According to a further embodiment, the communication initialization message is included in an IP datagram structure and the IP datagram structure indicates an IP address of the aircraft. The ground entity may obtain a public key certificate of the aircraft via the IP address of the aircraft. The term IP datagram structure refers to a structure comprising one or more IP datagrams, i.e. one or more IP packets. The IP datagram structure may also be referred to as IP packet structure. The IP datagram structure may consist of a single IP packet or may be composed of a plurality of IP packets. The IP address of the aircraft may be given in or may be deducible from each of the one or more IP packets. As is customary in the art, the abbreviation IP refers to Internet Protocol. Accordingly, the terms IP datagram and IP packet may also be referred to as Internet Protocol datagram and Internet Protocol packet. Given that aircraft are nowadays provided with IP addresses, which is in line with the expanding Internet of Things (IoT) environment around the globe, the IP address of the aircraft is data that is readily available in the aircraft and that can be conveniently included in the IP datagram structure.

In accordance with the preceding paragraph, the obtaining of the public key certificate may be arranged for by the ground entity with the help of the IP address of the aircraft. Accordingly, it can also be said that the method may comprise obtaining, at the ground entity, the public key certificate of the aircraft via the IP address of the aircraft. The ground entity may obtain the public key certificate of the aircraft from any suitable entity that has the public key certificate of the aircraft available. In particular, the ground entity may request the public key certificate of the aircraft from an entity for which it has a high level of trust. It is possible that the public key certificate of the aircraft is requested right from the issuer of the certificate or from an OCSP trusted responder or from another entity, such as a third party supplier administrating a database of aircraft certificates. The IP address of the aircraft may be used as an index for querying a certificate database and for obtaining the public key certificate of the aircraft. The IP address of the aircraft may be used as a means of unambiguous identification of the aircraft and as a means for unambiguously locating the public key certificate of the aircraft. In this way, the aircraft may be freed from the need to send its public key certificate to the ground entity.

Further details with respect to the ground entity obtaining the public key certificate of the aircraft via the IP address of the aircraft and with respect to related method steps are given in European patent application EP 24 170 901.3, filed on April 17, 2024 by the same applicant as the present application. The entire contents of EP 24 170 901.3 is incorporated into the present application by reference.

According to a further embodiment, the validation response is sent from the trusted responder to the ground entity and the validation response is included in a response message to the communication initialization message, which response message is sent from the ground entity to the aircraft. In this way, the aircraft is provided with the validation response regarding the public key certificate of the ground entity via the ground entity.

According to a further embodiment, the response message further comprises the public key certificate of the ground entity. In this way, the response message may be used for the dual purpose of providing the public key certificate of the ground entity and for providing an indication regarding the trustworthiness of the public key certificate of the ground entity, received from the trusted responder. The response message may be the first substantive response that the ground entity sends in response to the communication initialization message. In particular, the response message may be the first response that is not a simple receipt acknowledgement or retry command in reaction to the communication initialization message.

According to a further embodiment, the response message to the communication initialization message is a server hello message. In particular, the response message to the communication initialization message may be a server hello message in accordance with the TLS/DTLS communication protocol. The validation response, as forwarded by the ground entity, may be provided in a suitable extension of the server hello message.

According to a further embodiment, the validation request regarding the public key certificate of the ground entity is sent from the aircraft to the trusted responder and/or the validation response is sent from the trusted responder to the aircraft. The validation request may in particular be sent from the aircraft to the trusted responder, after the public key certificate of the ground entity has been received from the ground entity. The validation request and the validation response may be relayed on by the ground entity or may be routed between the aircraft and the trusted responder along a different way. As compared to above described embodiments, where the ground entity issues the validation request and receives the validation response, it is the aircraft that is the source and destination of the validation request and the validation response here. In this way, the beneficial effects of maintaining the pre-cached validation database at the trusted responder may be made use of, also in cases where the aircraft is in charge of the validation process regarding the public key certificate of the ground entity.

After the handshake between the aircraft and the ground entity, as described above, the aircraft and the ground entity may exchange messages, wherein messages from the aircraft to the ground entity are encrypted with a ground entity public key, associated with the public key certificate of the ground entity, and wherein messages from the ground entity to the aircraft are encrypted with an aircraft public key, associated with the public key certificate of the aircraft. In this way, after the establishment of the secure communication / after the handshake, the aircraft and the ground entity may share the substantive part of their communication in a secure manner via the usage of the public keys of the aircraft and the ground entity. The contents of these messages may be related to the flight of the aircraft and may contain any sort of relevant information for this flight, such as details of the flight route, status updates regarding the aircraft and its components, status updates regarding the destination airport and intermediate airports, flight traffic information, etc. The ground entity public key and the aircraft public key may be predefined / pre-generated keys. They may be exchanged between the aircraft and the ground entity or may be obtained from other sources. It is also possible that the ground entity public key and the aircraft public key are session keys, generated in an algorithmic manner with the help of the certificates of the aircraft and the ground entity.

So far, the interaction between the trusted responder, the ground entity, and the aircraft for facilitating a secure communication between the aircraft and the ground entity has been described. It is explicitly disclosed herewith that the behaviour and operation of each of the aircraft, the ground entity, and the trusted responder alone is also considered an independent aspect of the present invention. Accordingly, the roles of the aircraft, the ground entity, and the trusted responder will be described in a more separate manner as follows.

Exemplary embodiments of the invention further include a method of operating a trusted responder for facilitating a secure communication between an aircraft and a ground entity, the method comprising: receiving a public key certificate of the ground entity from the ground entity; validating the public key certificate of the ground entity and storing a trust indication regarding the public key certificate of the ground entity in a pre-cached validation database; and maintaining the pre-cached validation database for providing a validation response regarding the public key certificate of the ground entity, when a validation request, associated with the secure communication between the aircraft and the ground entity, reaches the trusted responder, wherein the validation response is based on the trust indication regarding the public key certificate of the ground entity from the pre-cached validation database. The additional features, modifications and effects, as described above in the context of the interaction of the trusted responder and the ground entity / aircraft, apply to the method of operating a trusted responder for facilitating a secure communication between an aircraft and a ground entity in an analogous manner, insofar as they relate to the behavior and operation of the trusted responder.

Exemplary embodiments of the invention further include a method of operating a ground entity for facilitating a secure communication between an aircraft and the ground entity, the method comprising: sending a public key certificate of the ground entity to a trusted responder for the trusted responder to validate the public key certificate of the ground entity and to store a trust indication regarding the public key certificate of the ground entity in a pre-cached validation database, wherein the sending of the public key certificate of the ground entity to the trusted responder is independent from a validation request regarding the public key certificate of the ground entity, associated with the secure communication between the aircraft and the ground entity. In particular, the sending of the public key certificate of the ground entity to the trusted responder may be independent from and may take place before a validation request regarding the public key certificate of the ground entity, associated with the secure communication between the aircraft and the ground entity, is issued. The additional features, modifications and effects, as described above in the context of the interaction of the trusted responder and the ground entity / aircraft, apply to the method of operating a ground entity for facilitating a secure communication between an aircraft and a ground entity in an analogous manner, insofar as they relate to the behavior and operation of the ground entity.

Exemplary embodiments of the invention further include a method of operating an aircraft for facilitating a secure communication between the aircraft and a ground entity, the method comprising any subset and any combination of the method steps carried out by the aircraft in accordance with the above description. In particular, the features, modifications and effects, as described above in the context of the interaction of the trusted responder and the ground entity / aircraft, apply to the method of operating an aircraft for facilitating a secure communication between an aircraft and a ground entity in an analogous manner, insofar as they relate to the behavior and operation of the aircraft.

Exemplary embodiments of the invention further include a trusted responder that is configured to be operated in accordance with the method of operating a trusted responder for facilitating a secure communication between an aircraft and a ground entity, as described herein. The trusted responder may have a memory, a processor, and a communication interface for exchanging messages with the ground entity / aircraft. The pre-cached validation database may be implemented in the memory of the trusted responder.

Exemplary embodiments of the invention further include a first communication device, also referred to herein as aircraft based communication device, that is configured to carry out a method of operating an aircraft for facilitating a secure communication between the aircraft and a ground entity, as described herein. The first communication device may have a memory, a processor, and a communication front end for exchanging messages with the ground entity over the air interface. A cryptographic key pair and an associated public key certificate of the aircraft may be stored in the memory, wherein the cryptographic key pair comprises a public key of the aircraft and a private key of the aircraft.

Exemplary embodiments of the invention further include a second communication device, also referred to herein as ground entity based communication device, that is configured to carry out a method of operating a ground entity for facilitating a secure communication between an aircraft and the ground entity, as described herein. The second communication device may have a memory, a processor, a communication front end for exchanging messages with the aircraft over the air interface, and a communication interface for exchanging messages with the trusted responder. A cryptographic key pair and an associated public key certificate of the ground entity may be stored in the memory, wherein the cryptographic key pair comprises a public key of the ground entity and a private key of the ground entity.

The processor(s) indicated above may include any processor or processing element known in the art. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the processor(s) may include any device configured to execute algorithms and/or instructions (e.g., program instructions stored in memory). In one embodiment, the processor(s) may be embodied as a desktop computer, mainframe computer system, workstation, image computer, parallel processor, networked computer, or any other computer system configured to execute a program instruction, as described throughout the present disclosure.

The memory components indicated above may include any storage medium known in the art suitable for storing program instructions executable by the associated processor(s). For example, the memory may include a non-transitory memory medium. By way of another example, the memory may include, but is not limited to, a read-only memory (ROM), a random-access memory (RAM), a magnetic or optical memory device (e.g., disk), a magnetic tape, a solid-state drive and the like. It is further noted that memory may be housed in a common controller housing with the associated processor. In one embodiment, the memory may be located remotely with respect to the physical location of the associated processor.

Exemplary embodiments of the invention further include a public key certificate validation system for facilitating a secure communication between an aircraft and a ground entity. Said system may comprise a trusted responder, as discussed above, a first communication device, as discussed above, and a second communication device, as discussed above. It is also possible that the system comprises the trusted responder, an aircraft having said first communication device, and a ground entity having said second communication device. The additional features, modifications and effects, as described above with respect to the method of operating a public key certificate validation system for facilitating a secure communication between an aircraft and a ground entity, apply to the public key certificate validation system for facilitating a secure communication between an aircraft and a ground entity in an analogous manner.

Further exemplary embodiments of the invention are described below with respect to the accompanying drawings, wherein:
Figure 1 shows an exemplary aviation framework, in which a method of operating a public key certificate validation system for facilitating a secure communication between an aircraft and a ground entity in accordance with exemplary embodiments of the invention can be carried out;
Figure 2 illustrates a method of operating a public key certificate validation system for facilitating a secure communication between an aircraft and a ground entity in accordance with an exemplary embodiment of the invention;
Figure 3 illustrates a method of operating a public key certificate validation system for facilitating a secure communication between an aircraft and a ground entity in accordance with another exemplary embodiment of the invention.

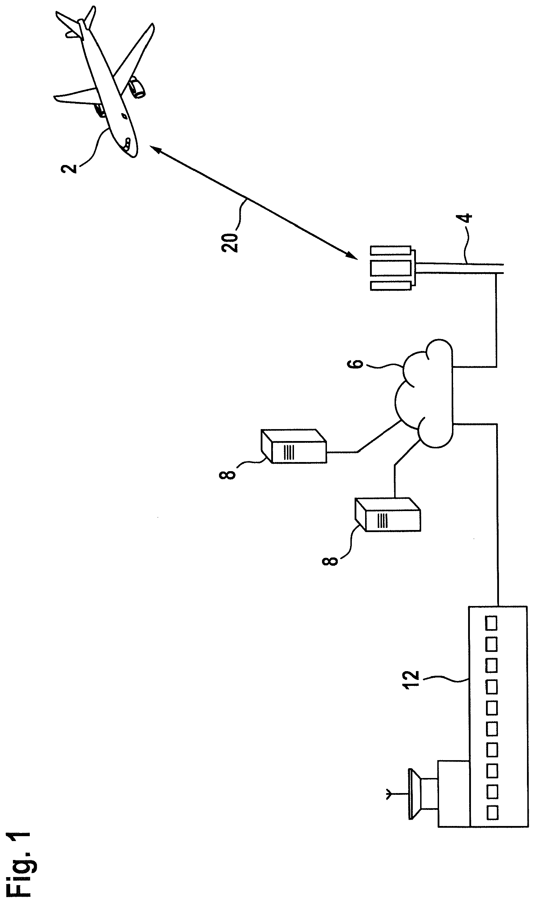

Figure 1 schematically illustrates a framework, in which a method of operating a public key certificate validation system for facilitating a secure communication 20 between an aircraft 2 and a ground entity 4 in accordance with exemplary embodiments of the invention may be carried out.

In the scenario of Figure 1, the aircraft 2 is a large commercial passenger air plane that is in flight and that is on its way to a destination airport 12. For the sake of illustration, it is assumed that the aircraft 2 is in the middle of a transatlantic fight, starting in Europe and travelling to the destination airport 12 in North America. Further, it is assumed that the aircraft 2 is over the Atlantic and is approaching the North American continent, with the ground entity 4 being a communication outpost in the Eastern parts of Canada. Accordingly, Figure 1 depicts a scenario where the aircraft 2 has travelled across the ocean for an extended period of time, is just getting into the reach of the ground entity 4, and would like to start a secure communication with the ground entity 4.

The ground entity 4 is connected to a communication network 6, such as the internet. With its connection to the communication network 6, the ground entity 4 may communicate with a wide range of entities worldwide. Accordingly, the aircraft 2 may use the ground entity 4 as a gateway to the communication network 6 and may also communicate with a wide range of entities via the secure communication 20 to the ground entity 4. The aircraft 2 and the ground entity 4 may have one or more antennas each, to carry out RF transmission between them.

The destination airport 12 is also connected to the communication network 6, and the aircraft 2 may communicate with the destination airport 12 via the secure communication 20. The aircraft 2 may also communicate with other airports along the way, with air traffic control entities, with other safety-related entities regarding air travel, etc. For all of these communications, the aircraft 2 may use the data link to the ground entity 4 as a gateway to the communication network 6.

While the ground entity 4, with which the aircraft 2 communicates, is described as a communication outpost in the exemplary scenario of Figure 1, it is understood that the ground entity 4, which is involved in the method according to exemplary embodiments of the invention, may also be an airport, an air traffic control center, or any other suitable kind of ground entity for establishing aviation communication.

The framework of Figure 1 further depicts two OCSP trusted responders 8. Each of the OCSP trusted responders 8 is connected to the communication network 6. The role of an OCSP trusted responder 8 in facilitating the secure communication 20 between the aircraft 2 and the ground entity 4 will be described below in the context of the method steps being carried out.

It will be understood from the description below that, for a particular run of a method in accordance with exemplary embodiments of the invention, a single OCSP trusted responder 8 may be sufficient. Figure 1 depicts two OCSP trusted responders 8 to illustrate that multiple instances of the depicted entities may be present. In particular, a large number of aircraft 2 may be in travel and may have communication needs. A large number of ground entities 4 may act as communication partners for the aircraft 2. A large number of airports 12 may be present as starting points and destinations for the aircraft 2. Also, various OCSP trusted respodners 8 may be operated to provide the certificate validation functionality described herein.

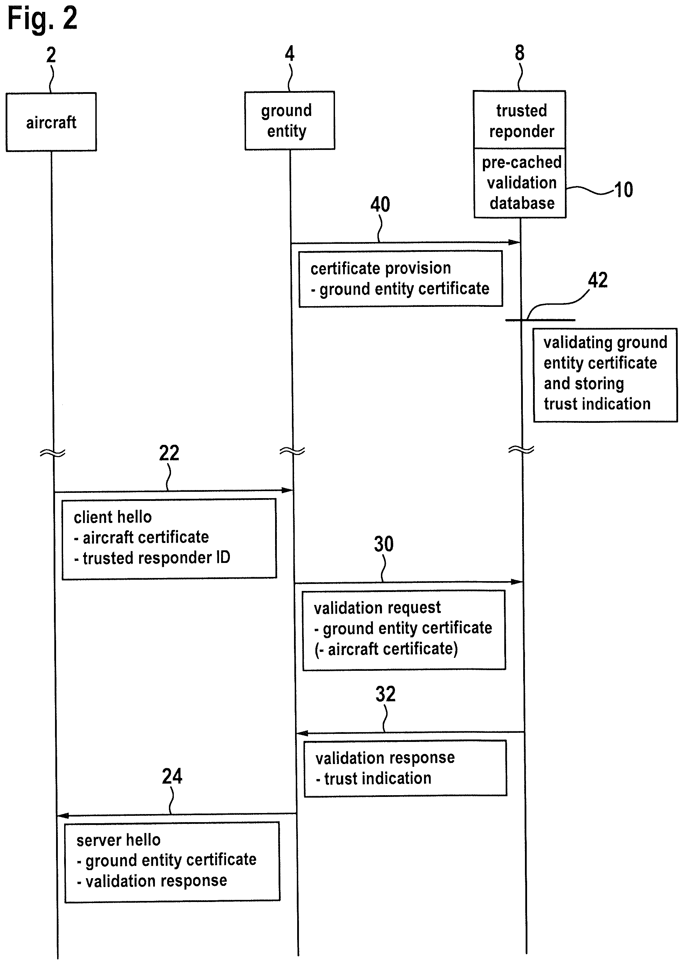

Figure 2 illustrates a method of operating a public key certificate validation system for facilitating a secure communication between an aircraft 2 and a ground entity 4 in accordance with an exemplary embodiment of the invention. In particular, Figure 2 illustrates a sequence of messages that are exchanged between an aircraft 2, a ground entity 4, and an OCSP trusted responder 8 for facilitating the secure communication between the aircraft 2 and the ground entity 4. The aircraft 2, the ground entity 4, and the OCSP trusted responder 8 may be the corresponding entities of the framework depicted in Figure 1. This is assumed for the following discussion. However, it is also possible that the aircraft 2, the ground entity 4, and the OCSP trusted responder 8 are set up and arranged differently, as compared to the scenario depicted in Figure 1.

The ground entity 4 and the OCSP trusted responder 8 may be seen as components of a public key certificate validation system, which, when operated in accordance with the below description, contributes to facilitating the secure communication between the aircraft 2 and the ground entity 4. In particular, the operation of the ground entity 4 and the OCSP trusted responder 8, as described below, may contribute to achieving a quick handshake between the aircraft 2 and the ground entity 4 in the course of establishing the secure communication.

The OCSP trusted responder 8 comprises a pre-cached validation database 10. The pre-cached validation database 10 is a database that stores trust indications regarding public key certificates. In particular, the pre-cached validation database 10 may store a trust indication per public key certificate, and the public key certificate or an ID of the entity associated with the public key certificate may be used as an index for retrieving the respective trust indication.

The pre-cached validation database 10 may be integrated with the OCSP trusted responder 8. It is also possible that the pre-cached validation database 10 is a stand-alone component. Said stand-alone component may be located at the site of the OCSP trusted responder 8 or may be remote from the trusted responder and may be accessible via a suitable data connection.

Independent from the particular communication instance between the aircraft 2 and the ground entity 4, the ground entity 4 sends a certificate provision message 40 to the OCSP trusted responder 8. The ground entity 4 may for example send such a certificate provision message 40 to the OCSP trusted responder 8 every morning. When assuming the transatlantic flight of the aircraft 2 of Figure 1 and when further assuming that the aircraft 2 reaches the communication range of the ground entity 4 around midday, the certificate provision message 40 may have been sent to the OCSP trusted responder 8 some hours before the secure communication 20 between the aircraft 2 and the ground entity 4 is to be established. While one OCSP trusted responder 8 is depicted in Figure 2 for ease of illustration, it is understood that the ground entity 4 may send such a certificate provision message 40 to a plurality of OCSP trusted responders.

The certificate provision message 40 comprises the public key certificate of the ground entity 4, indicated as ground entity certificate in Figure 2. The OCSP trusted responder 8 understands the certificate provision message 40 as a request to carry out a validation of the public key certificate of the ground entity 4, where the validation is not associated with a concrete communication instance between the ground entity 4 and an aircraft. It can also be said that the OCSP trusted responder 8 understands the certificate provision message 40 as a request for a pre-validation of the public key certificate of the ground entity 4. The certificate provision message 40 may also be referred to as a pre-validation request message 40. The nature of the validation request as a pre-validation request, i.e. as a validation request that is not associated with a concrete communication instance, can also be indicated / encoded in the certificate provision message 40 in a suitable manner.

When receiving the certificate provision message 40, the OCSP trusted responder 8 validates the public key certificate of the ground entity 4 and stores a trust indication regarding the public key certificate of the ground entity 4 in the pre-cached validation database 10. This is indicated as method step 42 in Figure 2, which is carried out by the OCSP trusted responder 8.

In particular, the OCSP trusted responder 8 evaluates a trustworthiness of the public key certificate of the ground entity 4. Further in particular, the OCSP trusted responder 8 may evaluate a trustworthiness of the public key certificate of the ground entity 4 in accordance with the Online Certificate Status Protocol (OCSP). For evaluating the trustworthiness of the public key certificate of the ground entity 4, the OCSP trusted responder 8 may check that the public key certificate of the ground entity 4 has not expired and has not been revoked. In addition, the OCSP trusted responder 8 may check which certificate issuer issued the public key certificate of the ground entity 4 and evaluate a trustworthiness of the public key certificate of this certificate issuer. The public key certificate of this certificate issuer may, in turn, be issued by another entity, whose trustworthiness may also be evaluated, and so on. In this way, the OCSP trusted responder 8 may walk the public key infrastructure (PKI) from the public key certificate of the ground entity 4 to a trusted root node, such as a particular trusted certificate authority. It can also be said that the OCSP trusted responder 8 evaluates all legs of a public key infrastructure (PKI) path from the public key certificate of the ground entity 4 to a trusted root node. This process is also referred to as validation of the public key certificate of the ground entity 4.

From the gathered information, the OCSP trusted responder 8 determines a trust indication regarding the public key certificate of the ground entity 4. When viewing the public key infrastructure (PKI) as a tree of certificate dependencies, the public key certificate of the ground entity 4 may be seen as a leaf of that tree, and the trust indication may be seen as an indication regarding the trustworthiness of that particular leaf. The trust indication may be a binary indication, simply stating whether the public key certificate of the ground entity 4 is trustworthy or not according to the OCSP trusted responder 8. It is also possible that the trust indication is some sort of trust score that the OCSP trusted responder 8 attributes to the public key certificate of the ground entity 4.

The OCSP trusted responder 8 stores the trust indication in the pre-cached validation database 10. In particular, the OCSP trusted responder 8 may store the public key certificate of the ground entity 4 together with the trust indication. In this way, the public key certificate of the ground entity 4 may later be used as an index to find and retrieve the trust indication. It is also possible that the trust indication is stored together with another unique identifier of the ground entity 4.

The OCSP trusted responder 8 maintains the record regarding the public key certificate of the ground entity 4 in the pre-cached validation database 10 for later use. In this way, the OCSP trusted responder 8 has the trust indication regarding the public key certificate of the ground entity 4 readily available, when queried at a later point in time in the course of establishing a concrete communication instance involving the ground entity 4.

The remainder of Figure 2 deals with the establishing of the secure communication 20 between the aircraft 2 and the ground entity 4, i.e. with the establishing of a concrete communication instance between the aircraft 2 and the ground entity 4. As stated above, the secure communication 20 may be established, when the aircraft 2 reaches the communication range of the ground entity 4. In particular, the remainder of Figure 2 deals with the handshake between the aircraft 2 and the ground entity 4. This handshake may be seen as part of the facilitating of the secure communication 20 between the aircraft 2 and the ground entity 4.

In order to start the secure communication between the aircraft 2 and the ground entity 4, the aircraft 2 sends a client hello message 22 to the ground entity 4. The client hello message 22 is the initial message in the exchange of messages between the aircraft 2 and the ground entity 4 and starts a handshake between the aircraft 2 and the ground entity 4. Herein, the client hello message 22 is also referred to as the communication initialization message 22.

The client hello message 22 comprises a public key certificate of the aircraft and a listing of at least one potential trusted responder. The public key certificate of the aircraft and the listing of at least one potential trusted responder are provided in respective extensions of the client hello message 22. The client hello message 22 may indicate a single potential trusted responder or may indicate a plurality of potential trusted responders. The indication of a potential trusted responder may in particular be a trusted responder ID. In the exemplary embodiment of Figure 2, the trusted responder ID, contained in the client hello message 22, is the ID of the OCSP trusted responder 8.

After receiving the client hello message 22, the ground entity 4 sends a validation request message 30 to the OCSP trusted responder 8. The validation request message 30 comprises the public key certificate of the ground entity 4 and, as an optional element, the public key certificate of the aircraft 2. Depending on whether the validation request message 30 comprises the public key certificate of the ground entity 4 only or both the public key certificate of the ground entity 4 and the public key certificate of the aircraft 2, the OCSP trusted responder 8 may act and respond somewhat differently.

When receiving the public key certificate of the ground entity 4 without the public key certificate of the aircraft 2, the OCSP trusted responder 8 queries the pre-cached validation database 10 for the trust indication regarding the public key certificate of the ground entity 4. As this trust indication is readily available in the pre-cached validation database 10 from the above described pre-validation of the public key certificate of the ground entity 4, the OCSP trusted responder 8 does not have to carry out an ad-hoc validation of the public key certificate of the ground entity 4. After a simple database access, the OCSP trusted responder 8 is in a position to respond to the validation request message 30. Accordingly, the turn-around time for responding to the validation request message 30 may be kept particularly low.

The OCSP trusted responder 8 sends a validation response message 32 to the ground entity 4. The validation response message 32 comprises the trust indication, as fetched from the pre-cached validation database 10 by the OCSP trusted responder 8. The trust indication may be encrypted or may be provided with other security features, such that the ground entity 4 cannot tamper with the trust indication in a non-apparent matter.

After receiving the validation response message 32 from the OCSP trusted responder 8, the ground entity 4 sends a server hello message 24 to the aircraft 2. The server hello message 24 comprises the public key certificate of the ground entity 4 and forwards the validation response message 32, as received from the OCSP trusted responder 8. The public key certificate of the ground entity 4 and the validation response may be provided in respective extensions of the server hello message 24. As the server hello message 24 is a response to the client hello message 22, it is herein also referred to as a response message 24 to the client hello message 22, i.e. as a response message 24 to the communication initialization message 22.

After receiving the server hello message 24, the aircraft 2 may start the secure communication with the ground entity 4. Before doing so, the aircraft 2 may assess the validation response from the OCSP trusted responder 8 and may make an informed decision whether the aircraft 2 considers the public key certificate of the ground entity 4 sufficiently trustworthy, in order to enter into a secure communication with the ground entity 4.

After the handshake consisting of the client hello message 22 and the server hello message 24, both the aircraft 2 and the ground entity 4 may have all the tools to carry out an encrypted communication between them. Also, after these two messages only, the aircraft 2 is in a position to take an informed / reasoned decision whether or not to trust the ground entity 4. The exchange of certificates and the provision of information for evaluating the trustworthiness of the ground entity 4 can be carried out with a very low number of messages between the aircraft 2 and the ground entity 4. The scarce RF resource between the aircraft 2 and the ground entity 4 may be used to a minimal extent, because the evaluation of the trustworthiness of the ground entity 4 is offloaded to ground entities only. Further, with the trust indication regarding the public key certificate of the ground entity 4 being readily available in the pre-cached validation database 10, the handshake between the aircraft 2 and the ground entity 4 may be carried out in a particularly quick manner, and the risk of the handshake failing due to time-out constraints can be kept particularly low.

The following substantive communication between the aircraft 2 and the ground entity 4 may be carried out via respective cryptographic key pairs of public and private keys. Each of the aircraft 2 and the ground entity 4 may have a respective pair of a public key and a private key, with the outbound communication being encrypted with the public key of the respectively other entity and with the inbound communication being decrypted with the private key of the receiving entity. Each of the cryptographic key pairs may in particular be an RSA key pair, an ESDSA key pair or any other type of suitable key pair. The cryptographic key pairs may be predefined / pre-generated key pairs, with the public keys being exchanged between the aircraft 2 and the ground entity 4 during or after the handshake or being obtained from other sources. It is also possible that the cryptographic key pairs session key pairs that are generated with the help of the public key certificates of the aircraft 2 and the ground entity 4.

As indicated above, it is possible that the validation request message 30 comprises both the public key certificate of the ground entity 4 and the public key certificate of the aircraft 2. In this case, the OCSP trusted responder 8 may not only provide an indication regarding the trustworthiness of the public key certificate of the ground entity 4, but may provide an indication regarding the trustworthiness of both the public key certificate of the ground entity 4 and the public key certificate of the aircraft 2. In terms of the public key infrastructure (PKI) tree, the OCSP trusted responder 8 may provide a trust indication regarding the full path between the public key certificate of the ground entity 4 and the public key certificate of the aircraft 2. In this way, the OCSP trusted responder 8 may give an indication regarding the level of trust for the full leaf-to-leaf path between the public key certificate of the ground entity 4 and the public key certificate of the aircraft 2.

As stated above, the trust indication regarding the public key certificate of the ground entity 4 is readily available in the pre-cached validation database 10. It is also possible that a trust indication regarding the public key certificate of the aircraft 2 is readily available in the pre-cached validation database 10. This may the case, if the aircraft 2 has previously sent a pre-validation request to the OCSP trusted responder 8, analogous to the pre-validation of the public key certificate of the ground entity 4 discussed above. It is also possible that the OCSP trusted responder 8 performs an ad-hoc validation of the public key certificate of the aircraft 2, when receiving the validation request message 30 with the public key certificate of the aircraft 2.

In case the ground entity 4 also trusts the OCSP responder 8, the joint provision of the public key certificate of the ground entity 4 and the public key certificate of the aircraft 2 in the validation request message 30 may lead to an according joint response in the validation response message 32, which may be considered sufficient for the ground entity 4 to trust the public key certificate of the aircraft 2. In that case, the ground entity 4 does not need to carry out further validation procedures. It is also possible that the ground entity 4 has an upfront trust of the public key certificate of the aircraft 2 and does not require any sort of validation. It is further possible that the ground entity 4 performs another kind of validation and requests another entity to validate the public key certificate of the aircraft 2 in a separate procedure. Such a separate procedure may be carried out in parallel with the sending of the validation request message 30. While this separate procedure is not explicitly depicted in Figure 2, it is understood to be an option for the ground entity 4.

For ease of illustration, only one aircraft 2, only one ground entity 4, and only one OCSP trusted responder 8 are depicted and described in Figure 2. For ease of illustration, Figure 2 is also based on the assumption that the aircraft 2 indicates, in the communication initialization message 22, exactly that OCSP trusted responder 8 that previously received the certificate provision message 40 from that ground entity 4 that the aircraft 2 wants to communicate with. It is understood that, in a more comprehensive aviation environment, a plurality of aircraft, a plurality of ground entities, and a plurality of OCSP trusted responders may be present. While the ground entities may distribute certificate provision messages 40 widely among the OCSP trusted responders for pre-validation, there can be instances where the particular OCSP trusted responder, as indicated by a particular aircraft, has not pre-validated the public key certificate of the particular ground entity that the particular aircraft wants to communicate with. Under such circumstances, the OCSP trusted responder may carry out an ad-hoc validation of the public key certificate of the ground entity. Hence, it is possible that the OCSP trusted responder relies on the pre-cached validation database for some validation requests and does not rely on the pre-cached validation database for other validation requests, associated with concrete communication instances. Stated differently, the OCSP trusted responders, the ground entities, and the aircraft, as described herein, do not have to operate in accordance with the methods according to exemplary embodiments of the invention all the time / for all instances of secure communication. The methods according to exemplary embodiments of the invention are also beneficial, in case the records of the pre-cached validation database can be used for only parts of the concrete communication instances between aircraft and ground entities.

The method of operating a public key certificate validation system and facilitating a secure communication between an aircraft 2 and a ground entity 4, as described with respect to Figure 2, may be adapted in various ways. Some exemplary variations are described as follows. The exemplary variations also yield methods in accordance with exemplary embodiments of the invention.

For example, it is possible that the communication initialization message 22 / client hello message 22 does not comprise the public key certificate of the aircraft and that the aircraft 2 sends a certificate provision message, including its public key certificate, to the ground entity 4, after the response message 24 / server hello message 24 is received.

As another example, it is possible that the communication initialization message 22 / client hello message 22 does not comprise the public key certificate of the aircraft 2, but some form of unique identification information regarding the public key certificate of the aircraft 2, such as certificate issuer information and a serial number of the public key certificate of the aircraft 2. With this information at hand, the ground entity 4 may obtain the public key certificate of the aircraft 2 from another source, such as from a suitable certificate database, e.g. from a certificate database maintained by the certificate issuer. The ground entity 4 may carry out the obtaining of the public key certificate of the aircraft 4 before, after, or concurrent with the sending of the validation request message 30.

As yet another example, it is possible that the communication initialization message 22 / client hello message 22 is included in / embedded in / encapsulated in an IP datagram structure, wherein the IP datagram structure comprises the IP address of the aircraft 2. The ground entity 4 may use said IP address of the aircraft 2 as a unique identifier of the aircraft 2 and may obtain the public key certificate of the aircraft 2 from another source, such as from a suitable certificate database, with the help of the IP address of the aircraft 2. In this case, the aircraft 2 does not have to send its public key certificate to the ground entity 4. The ground entity 4 may carry out the obtaining of the public key certificate of the aircraft 4 before, after, or concurrent with the sending of the validation request message 30.

As a further example, it is possible that the validation response message 32 does not comprise the trust indication, as stored in the pre-cached validation database, but comprises information that is derived from said trust indication.

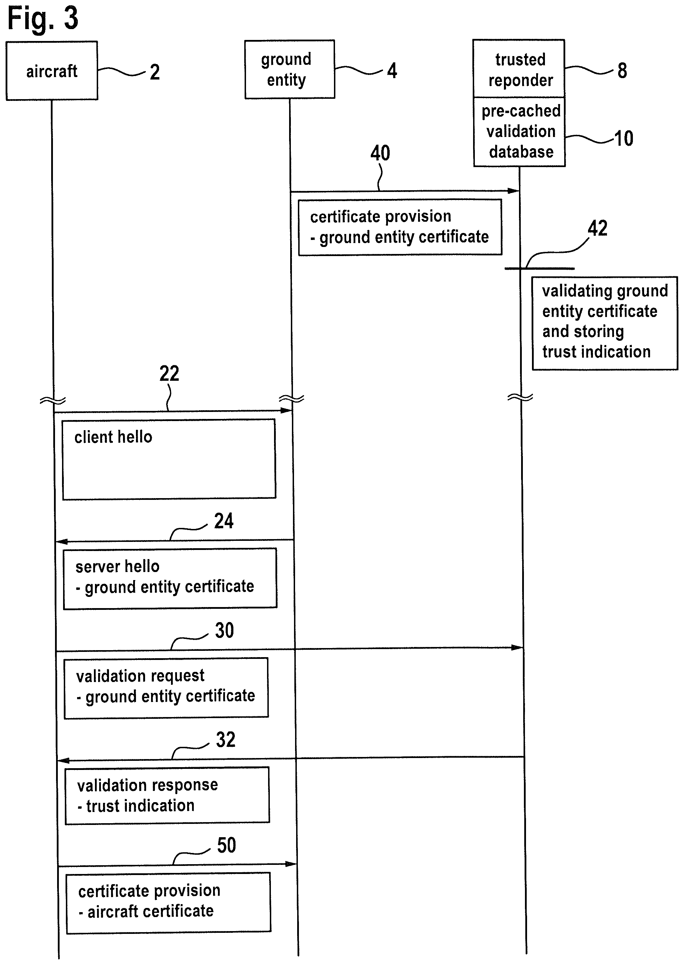

Figure 3 illustrates a method of operating a public key certificate validation system for facilitating a secure communication between an aircraft 2 and a ground entity 4 according to another exemplary embodiment of the invention. The method of Figure 3 is similar to the method of Figure 2, and according entities and messages are denoted with the same reference numerals. They are not described again, and reference is made to their description in the context of Figure 2 above. The following description focuses on the differences between the method of Figure 3 and the method of Figure 2.

In the method of Figure 3, the handshake between the aircraft 2 and ground entity 4 differs from the handshake described above with respect to Figure 2. In the method of Figure 3, the client hello message 22 from the aircraft 2 does not comprise the public key certificate of the aircraft 2. Also, the client hello message 22 does not comprise a listing of at least one potential trusted responder. In terms of the authentication of the communication partners, the client hello message 22 of Figure 3 merely triggers the process. With the server hello message 24, the ground entity 4 responds to the client hello message 22 and provides its public key certificate, i.e. the public key certificate of the ground entity 4.

In the method of Figure 3, the aircraft 2 is responsible for the validation of the public key certificate of the ground entity 4. For this purpose, the aircraft 2 sends the validation request message 30 to the OCSP trusted responder 8. The validation request message 30 comprises the public key certificate of the ground entity 4. The validation request message 30 may be relayed on by the ground entity 4 to the OCSP trusted responder 8 or may be routed from the aircraft 2 to the OCSP trusted responder 8 along a different communication path.

As described above with respect to Figure 2, the OCSP trusted responder 8 fetches the trust indication regarding the public key certificate of the ground entity 4 from the pre-cached validation database 10. The OCSP trusted responder 8 includes the trust indication into the validation response message 32 and sends the validation response message 32 to the aircraft 2. Again, the validation response message 32 may be relayed on by the ground entity 4 or may be routed from the OCSP trusted responder 8 to the aircraft 2 along a different communication path.

Only after receiving the validation response message 32 and making an informed decision on whether to enter into a secure communication with the ground entity 4, the aircraft 2 sends a certificate provision message 50, including the public key certificate of the aircraft 2, to the ground entity 4.

Figure 3 shows that, also in cases where there is no or less front-loading of the handshake due the inclusion of the public key certificate of the aircraft 2 into the client hello message 22 and/or due to the inclusion of a listing of at least one potential trusted responder into the client hello message 22, the pre-cached validation database may still be made use of. The pre-validation of the public key certificate of the ground entity 4 and the maintaining of the pre-cached validation database 10 may still contribute to a comparably quick handshake in the exemplary embodiment of Figure 3.

While the invention has been described with reference to exemplary embodiments, it will be understood by those skilled in the art that various changes may be made and equivalents may be substituted for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. Method of operating a public key certificate validation system for facilitating a secure communication (20) between an aircraft (2) and a ground entity (4), the method comprising:
sending a public key certificate of the ground entity (4) from the ground entity (4) to a trusted responder (8);
at the trusted responder (8), validating the public key certificate of the ground entity (4) and storing a trust indication regarding the public key certificate of the ground entity in a pre-cached validation database (10); and
at the trusted responder (8), maintaining the pre-cached validation database (10) for providing a validation response (32) regarding the public key certificate of the ground entity (4), when a validation request (30), associated with the secure communication between the aircraft (2) and the ground entity (4), reaches the trusted responder (8),
wherein the validation response (32) is based on the trust indication regarding the public key certificate of the ground entity (4) from the pre-cached validation database (10).

2. Method according to claim 1,
wherein the trusted responder (8) is an Online Certificate Status Protocol (OCSP) trusted responder,
and/or
wherein the validation request (30) and the validation response (32) are an OCSP validation request and an OCSP validation response, respectively.

3. Method according to claim 1 or 2,
wherein said validating of the public key certificate of the ground entity (4) comprises evaluating all legs of a public key infrastructure (PKI) path between the public key certificate of the ground entity (4) and a trusted root node, such as a trusted certificate authority,
and/or
wherein the trust indication regarding the public key certificate of the ground entity (4), stored in the pre-cached validation database (10), is a trust indication regarding a PKI path between the public key certificate of the ground entity (4) and a trusted root node, such as a trusted certificate authority.

4. Method according to any of the preceding claims, wherein the secure communication (20) between the aircraft (2) and the ground entity (4) is a Transport Layer Security (TLS) / Datagram Transport Layer Security (DTLS) based secure communication.

5. Method according to any of the preceding claims, further comprising:
re-sending the public key certificate of the ground entity (4) from the ground entity (4) to the trusted responder (8) in predefined intervals and/or sending a new public key certificate of the ground entity (4) from the ground entity (4) to the trusted responder (8); and
at the trusted responder (8), re-validating the public key certificate of the ground entity (4) and/or validating the new public key certificate of the ground entity (4) and storing an updated trust indication regarding the public key certificate or the new public key certificate of the ground entity (4) in the pre-cached validation database (10).

6. Method according to any of the preceding claims, comprising:
sending the public key certificate of the ground entity (4) from the ground entity (4) to a plurality of trusted responders (8);
at each of the plurality of trusted responders (8), validating the public key certificate of the ground entity (4) and storing a respective trust indication regarding the public key certificate of the ground entity (4) in a respective pre-cached validation database; and
at each of the plurality of trusted responders (8), maintaining the respective pre-cached validation database for providing a validation response (32) regarding the public key certificate of the ground entity (4), when a validation request (30), associated with the secure communication (20) between the aircraft (2) and the ground entity (4), reaches the respective trusted responder (8), wherein the validation response (32) is based on the respective trust indication regarding the public key certificate of the ground entity (4) from the respective pre-cached validation database (10).

7. Method according to any of the preceding claims, comprising:
at the trusted responder (8), receiving, from each of a plurality of ground entities, a respective public key certificate;
at the trusted responder (8), validating, for each of the plurality of ground entities, the respective public key certificate and storing a respective trust indication regarding the respective public key certificate of the respective ground entity in the pre-cached validation database; and
at the trusted responder (8), maintaining the pre-cached validation database (10) for providing respective validation responses regarding the respective public key certificates of the plurality of ground entities, wherein the respective validation responses are based on the respective trust indications regarding the respective public key certificates of the plurality of ground entities from the pre-cached validation database.

8. Method according to any of the preceding claims, comprising:
at the trusted responder (8), receiving, from each of a plurality of aircraft, a respective aircraft public key certificate;
at the trusted responder (8), validating, for each of the plurality of aircraft, the respective aircraft public key certificate and storing a respective aircraft trust indication regarding the respective aircraft public key certificate of the respective aircraft in the pre-cached validation database; and
at the trusted responder (8), maintaining the pre-cached validation database for providing respective validation responses regarding the respective aircraft public key certificates of the plurality of aircraft, wherein the respective validation responses are based on the respective trust indications regarding the respective aircraft public key certificates of the plurality of aircraft from the pre-cached validation database.

9. Method according to any of the preceding claims, wherein the validation request (30) regarding the public key certificate of the ground entity (4) is sent from the ground entity (4) to the trusted responder (8) in response to receiving a communication initialization message (22) from the aircraft.

10. Method according to claim 9,
wherein the trusted responder (8) is indicated in the communication initialization message (22) from the aircraft,
wherein the trusted responder (8) is in particular indicated in a listing of at least one potential trusted responder, said listing being included in the communication initialization message (22) from the aircraft.

11. Method according to claim 10,
wherein the communication initialization message (22) is a client hello message,
wherein the listing of the at least one potential trusted responder is in particular included in a responder extension of the client hello message.

12. Method according to any of claims 9 to 11, wherein the validation response (32) is sent from the trusted responder (8) to the ground entity (4) and wherein the validation response (32) is included in a response message (24) to the communication initialization message (22), sent from the ground entity (4) to the aircraft (2), wherein the response message (24) is in particular a server hello message.

13. Method according to any of claim 1 to 8,
wherein the validation request (30) regarding the public key certificate of the ground entity (4) is sent from the aircraft (2) to the trusted responder (8),
and/or
wherein the validation response (32) is sent from the trusted responder (8) to the aircraft (2).

14. Method of operating a trusted responder (8) for facilitating a secure communication (20) between an aircraft (2) and a ground entity (4), the method comprising:
receiving a public key certificate of the ground entity (4) from the ground entity (4);
validating the public key certificate of the ground entity (4) and storing a trust indication regarding the public key certificate of the ground entity (4) in a pre-cached validation database (10); and
maintaining the pre-cached validation database (10) for providing a validation response (32) regarding the public key certificate of the ground entity (4), when a validation request (30), associated with the secure communication (20) between the aircraft (2) and the ground entity (4), reaches the trusted responder (8),
wherein the validation response (32) is based on the trust indication regarding the public key certificate of the ground entity (4) from the pre-cached validation database (10).

15. Method of operating a ground entity (4) for facilitating a secure communication (20) between an aircraft (2) and the ground entity (4), the method comprising:
sending a public key certificate of the ground entity (4) to a trusted responder (8) for the trusted responder (8) to validate the public key certificate of the ground entity (4) and to store a trust indication regarding the public key certificate of the ground entity (4) in a pre-cached validation database (10),
wherein the sending of the public key certificate of the ground entity (4) to the trusted responder (8) is independent from a validation request (30) regarding the public key certificate of the ground entity (4), associated with the secure communication (20) between the aircraft (2) and the ground entity (4).
